## Europäisches Patentamt
## European Patent Office
## Office européen des brevets

(11) Veröffentlichungsnummer: **0 255 004**
**B1**

(12) **EUROPÄISCHE PATENTSCHRIFT**

(45) Veröffentlichungstag der Patentschrift:
26.09.90

(51) Int. Cl.⁵: **B60H 1/24**

(21) Anmeldenummer: 87110411.3

(22) Anmeldetag: **17.07.87**

(54) **Anordnung zur Belüftung eines Kraftfahrzeugs.**

(30) Priorität: **30.07.86 DE 3625681 U**

(43) Veröffentlichungstag der Anmeldung:
**03.02.88 Patentblatt 88/5**

(45) Bekanntmachung des Hinweises auf die Patenterteilung:
**26.09.90 Patentblatt 90/39**

(84) Benannte Vertragsstaaten:
**BE DE ES FR GB IT NL SE**

(56) Entgegenhaltungen:
**DE-A- 3 539 063**
**NL-A- 6 801 521**
**US-A- 2 892 319**

**PATENT ABSTRACTS OF JAPAN, Band 5, Nr. 83, (M-71)[755], 30. Mai 1981; & JP-A-56 31 808 (NISSAN JIDOSHA K.K.) 31-03-1981**
**PATENT ABSTRACTS OF JAPAN, Band 8, Nr. 244 (M-337)[1681], 9. November 1984; & JP-A-59 124 429 (SHIYOUWA ARUMINIUMA K.K.) 18-07-1984**

(73) Patentinhaber: **Siemens Aktiengesellschaft, Wittelsbacherplatz 2, D-8000 München 2(DE)**

(72) Erfinder: **Radtke, Wolfgang, Nachtigallenweg 46, D-5063 Steinenbrück(DE)**
Erfinder: **Soethout, Freddie, Hunsrückstrasse 5, D-5000 Köln 60(DE)**

## Beschreibung

Die Erfindung bezieht sich auf eine Anordnung zur Belüftung eines Kraftfahrzeugs, insbesondere eines Personenkraftwagens, gemäß Oberbegriff des Anspruchs 1; eine derartige Anordnung ist durch die US-A 2 892 319 bekannt.

Zur Begrenzung der Innenraumaufheizung bei Kraftfahrzeugen werden bekanntlich etwa 300 bis 700 m³/h Außenluft oder in einer Klimaanlage gekühlte Luft durch den Fahrzeuginnenraum transportiert. In dem im allgemeinen etwa 2 bis 3 m³ großen Fahrzeuginnenraum entstehen dadurch hohe Luftwechsel mit starken Zugerscheinungen für die Fahrzeuginsassen. Das Öffnen von Seitenscheiben oder Schiebedächern führt ebenfalls zu einem starken Luftwechsel im Fahrzeug und verursacht bei höherer Geschwindigkeit unzuträglich hohe Luftgeschwindigkeiten und Geräusche im Fahrzeuginnenraum. Wegen dieser Zugbelästigung und aus Furcht vor Erkältungskrankheiten verzichten deshalb empfindlich reagierende Menschen auf eine wirkungsvolle Kühlung des Fahrzeuginnenraumes.

Insbesondere wenn in überhitzten Fahrzeugen einzelne Mitfahrer die Luftdüsen im Armaturenbrett auf sich richten, kann dieser Luftstrahl auf Teilbereichen einer schwitzenden Person zu rheumatischen Beschwerden oder zu Erkältungskrankheiten führen.

Durch die eingangs genannte US-A 2 892 319 ist eine Anordnung zur Belüftung des Fahrgastraums in einem Kraftfahrzeug bekannt, bei welcher die durch über das gesamte Armaturenbrett verteilte Öffnungen austretende Luft nicht nur direkt in den Innenraum des Fahrzeugs, sondern auch entlang der Frontscheibe in den Zwischenraum zwischen dem Fahrzeugdach und der Dachverkleidung strömt; dazu ist der im übrigen konstante Abstand zwischen dem Fahrzeugdach und der Dachverkleidung vor der Frontscheibe über seine gesamte Breite nach Art einer Einmündungsöffnung erweitert. Die Strömungsführung ist dabei z.B. abhängig von der Position der Sonnenblenden. Durch die Vielzahl der Öffnungen parallel zur Frontscheibe, die üblicherweise einen geringen Querschnitt und somit eine entsprechend große Strahloberfläche haben, wird durch Injektion ein großer Teil der kinetischen Energie des Luftstrahles umgewandelt, ehe er den oberen Scheibenrand erreicht. Der im Bereich des oberen Scheibenrandes erforderliche hohe Druck erfordert eine hohe Austrittsgeschwindigkeit mit entsprechend hohen Geräuschen.

Der Erfindung liegt nun die Aufgabe zugrunde, in einem Fahrzeug mit Staudruck- oder Gebläsebelüftung des Fahrgastraumes der eingangs genannten Art trotz hoher Luftwechsel für alle Sitzplätze mit einfachen Mitteln unter sämtlichen Betriebsbedingungen eine wenigstens annähernd gleichmäßige Luftströmung mit geringer Luftgeschwindigkeit gewährleisten zu können.

Die Lösung dieser Aufgabe geschieht erfindungsgemäß mit den kennzeichnenden Merkmalen des Anspruchs 1. Weitere besonders vorteilhafte Gestaltungsmerkmale ergeben sich aus den Unteransprüchen.

Die erfindungsgemäße Luftströmung aus der Luftaustrittsdüse im Bereich der Armaturenbrettmitte ist unabhängig von der Frontscheibenbeheizung. Der Einmündungtrichter oberhalb der Frontscheibe hat einen entsprechend der Strahlerweiterung größeren und gezielten Einlaufdurchmesser. Der als Druckraum ausgebildete Zwischenraum ist in der Strömungsrichtung oberhalb der Heckscheibe geschlossen oder er enthält wenigstens keine Abströmöffnungen, die sich wesentlich auf die Luftverteilung auswirken können.

In einer besonderen Ausführungsform der Anordnung zur Belüftung eines Kraftfahrzeugs kann der Luftaustrittsdüse ein Gleichrichter, vorzugsweise eine Laminardrossel, zugeordnet sein.

Vorteilhaft ist diese Einrichtung ergänzt durch eine Dachverkleidung mit Öffnungen über nahezu die gesamte Dachverkleidungsfläche, wobei die unmittelbar über den Sitzplätzen liegenden Öffnungen sowohl verschlossen werden können als auch durch Änderung der Luftdurchtrittsquerschnitte vergrößert werden können. Dadurch erhält man eine verstärkte Luftströmung, die vorzugsweise individuell vom jeweiligen Fahrzeugplatz einstellbar sien kann.

Außerdem kann diese Vorrichtung ergänzt werden durch Luftaustrittsschlitze, die oberhalb der Seitenscheiben münden und einen Teil des Luftstromes entlang der Seitenscheiben lenken. Mit dieser Ausführungsform erhält man eine Stabilisierung des Luftstrahls und eine Abschirmung der Fahrzeugwandfläche.

In einer weiteren Ausgestaltung der Anordnung sind in der Dachverkleidung vorzugsweise mehrere absperrbare Kanäle vorgesehen, die eine unterschiedliche Verteilung der Luftrichtung zu einzelnen Feldern des Zwischenraumes ermöglichen.

Der Einmundungtrichter kann vorteilhaft in der Strömungsrichtung mit einer Strahlverengung zur Frontscheibe versehen sein und die dadurch gebildete Engstelle kann vorteilhaft wenigstens einen Luftschlitz enthalten, der nach Art eines Injektors Luft aus dem Fahrgastraum ansaugt, die vom Einmündungtrichter nicht erfaßt worden ist.

Zur weiteren Erläuterung der Erfindung wird auf die Zeichnung Bezug genommen, in der ein Ausführungsbeispiel einer Anordnung nach der Erfindung schematisch veranschaulicht ist. Figur 1 zeigt eine Anordnung zur Belüftung eines Fahrzeuginnenraums als Draufsicht. In Figur 2 ist die Anordnung als Querschnitt dargestellt. In Figur 3 ist die Ausführungsform des Hauptkanals zwischen dem Fahrzeugdach und der Dachverkleidung als Querschnitt veranschaulicht.

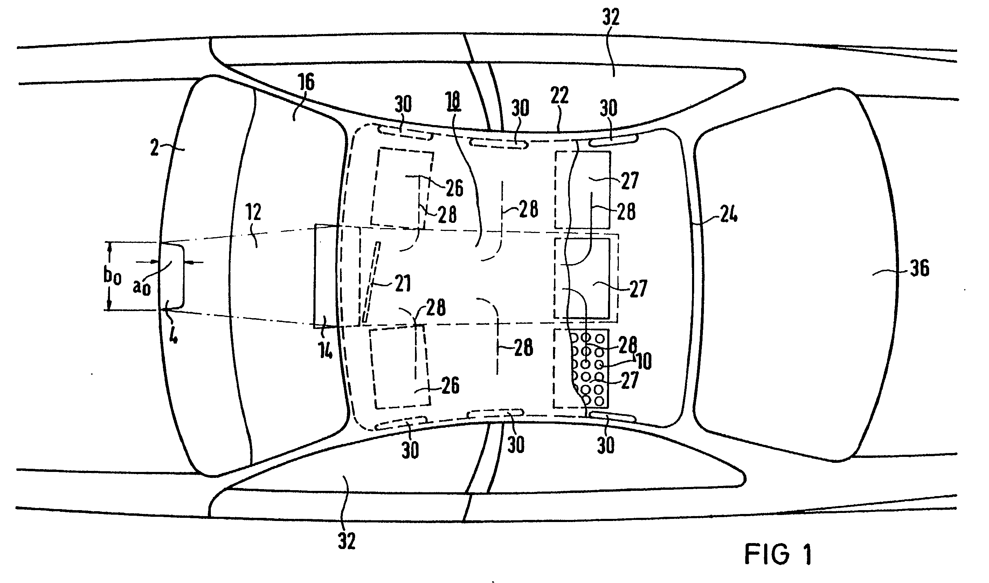

In der Ausführungsform einer Anordnung zur Staudruckoder Gebläsebelüftung des Fahrgastraumes eines Kraftfahrzeugs, insbesondere mit einer Klimaanlage, ist gemäß Figur 1 im Bereich der Mitte des Armaturenbretts 2 eine von einer Scheibenheizung getrennte Luftaustrittsdüse 4 für eine gebündelte, turbulenzarme Luftströmung vorgesehen, die an der Frontscheibe 16 einen wandungslosen Luftströmungskanal 12 bildet, der wenigstens annähernd parallel zur Frontscheibe 16 verläuft. Eine besonders kompakte Luftströmung in diesem Strömungskanal 12 erhält man mit einer Luftaustrittsdüse 4, deren Breite $b_0$ zur Tiefe $a_0$ etwa 5:1 nicht wesentlich überschreitet und vorzugsweise höchstens etwa 3:1 beträgt.

Die Luftströmung wird von einem Einmündungstrichter 14 erfaßt, der mit einem entsprechend großen Einlaufquerschnitt versehen ist und tritt in einem mittleren Bereich 18 in einem als Druckraum ausgebildeten Zwischenraum 20 zwischen einem Dach 22 und einer Dachverkleidung 24 ein. Der Zwischenraum 20 enthält in der Strömungsrichtung oberhalb einer Heckscheibe 36 keine Öffnungen, die sich wesentlich auf den Druckaufbau im Zwischenraum 20 auswirken können.

Die Dachverkleidung 24 ist wenigstens in unmittelbar über den Sitzplätzen des Fahrgastraumes liegenden Bereichen 26 und 27 mit Austrittsöffnungen 10 versehen, von denen lediglich einige in der Figur angedeutet sind. Diese Austrittsöffnungen 10 können vorzugsweise mit veränderbarem Luftdurchtrittsquerschnitt ausgeführt sein, so daß die aus den Öffnungen 10 austretende Luftströmung individuell vom jeweiligen Fahrzeugplatz eingestellt werden kann. Zu diesem Zweck können die Austrittsöffnungen 10 in den Bereichen 26 und 27 beispielsweise mit sogenannten in der Figur nicht dargestellten Lochschiebern versehen sein. Gegebenenfalls können auch Austrittsgitter vorgesehen sein, mit denen die aus dem Druckraum austretende Luftströmung nach Größe und Richtung eingestellt werden kann.

Die Luft strömt in dem mittleren Bereich 18 des als Druckraum ausgebildeten Zwischenraums 20 im wesentlichen von vorne nach hinten. Durch als Lenkflächen wirkende Leitelemente 28 wird ein Teil de Luftströmung von diesem mittleren Bereich 18 zur Seite hin abgelenkt. Dadurch wird im Zwischenraum 20 ein gleichmäßiger Druck aufgebaut, so daß man eine entsprechend gleichmäßige Strömung der Luft wenigstens annähernd senkrecht in den Fahrzeuginnenraum erhält. Durch diese nahezu senkrechte Ausströmung wird erreicht, daß bei nahezu geschlossenen Austrittsöffnungen 10 praktisch keine Luft den betreffenden Sitzplatz direkt erreicht. Dagegen ergibt sich in den Bereichen 26 mit vergrößerter Öffnung 10 ein verstärkter Luftstrahl, der sich lediglich auf diesen Sitzbereich auswirkt, ohne anschließend Personen auf benachbarten Sitzen stören zu können.

Die Dachverkleidung 24 kann vorteilhaft mit seitlichen Luftaustrittsschlitzen 30 versehen sein, die oberhalb der Seitenscheiben 32 münden und einen Teil des Luftstromes entlang der Seitenscheiben 32 lenken. Durch diese Luftführung erhält man eine Stabilisierung des Luftstrahls und eine Abschirmung der Fahrzeugwandflächen. Ferner erhält man durch die aus den Luftschlitzen 30 seitlich an die Scheiben gerichtete Luftströmung insbesondere im Winter eine Erwärmung und im Sommer eine Kühlung der Seitenscheiben.

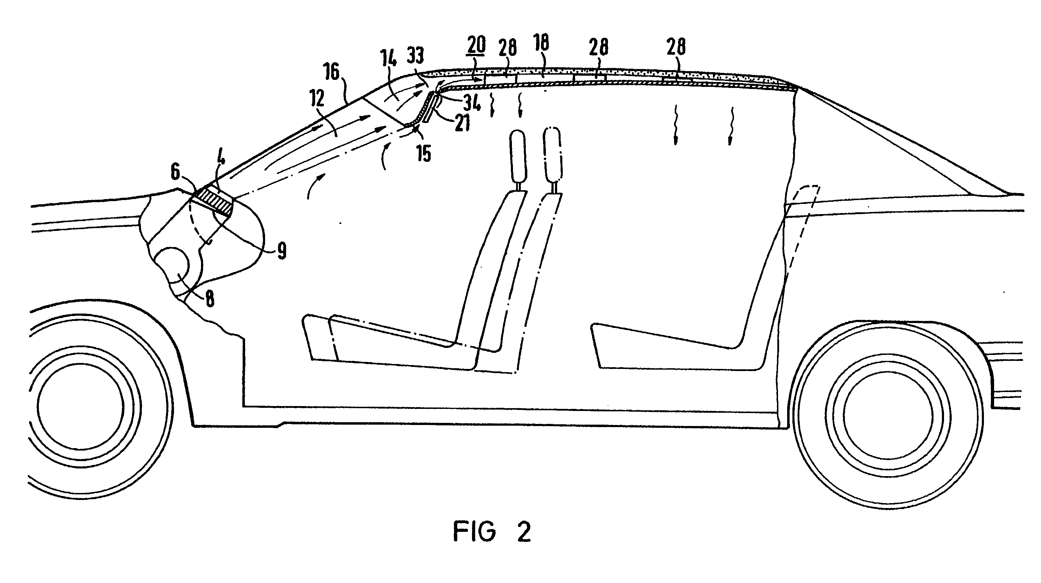

In der teilweise geschnittenen Seitenansicht gemäß Figur 2 ist eine Luftaustrittsdüse 4 dargestellt, der eine Laminardrossel 6 zugeordnet ist. Von einem Ventilator 8 wird dem Fahrzeuginnenraum Kühlluft zugeführt. Durch eine Klappe 9 kann die Luftzuführung unterbrochen werden. Die Laminardrossel 6 wirkt als Gleichrichter für die Luftströmung, die aus der Düse 4 austritt. Durch die Anordnung des Gleichrichters in Form einer Laminardrossel 6 werden die Strömungsgeräusche innerhalb der Luftaustrittsdüse 4 erheblich vermindert. Dadurch ist eine sehr kompakte Anordnung der Luftzuführung unmittelbar hinter dem Kühlluftgebläse 8 möglich. Die Luftströmung im wandungslosen Luftströmungskanal 12 gelangt unter der Frontscheibe 16 zum Einmündungstrichter 14, der vorn durch die Frontscheibe 16 und hinten durch eine im Bereich des Rückspiegels 21 angeordnete Wand 15 sowie durch seitliche Wände begrenzt wird.

Die dem Fahrgastraum zugewandte Wand 15 des Einmündungstrichters 14 kann in Strömungsrichtung vorzugsweise zur Frontscheibe 16 hin derart abgebogen sein, daß eine etwa stetige Strömungsverengung und somit eine entsprechende Strömungsbeschleunigung eintritt. An seiner Engstelle 33 mündet der Einmündungstrichter 14 in einen als Druckraum ausgebildeten Zwischenraum 20 zwischen dem Dach 22 und der Dachverkleidung 24. An dieser Engstelle 33 kann der Einmündungstrichter 14 vorzugsweise mit wenigstens einem Luftschlitz 34 nach Art eines Injektors versehen sein. Durch solche Luftschlitze wird zusätzlich Luft angesaugt, die vom Einmündungstrichter nicht erfaßt worden ist. Der Einmündungstrichter 14 ist unter dem oberen Bereich der Frontscheibe 16 derart angeordnet, daß er den Raum zwischen der Frontscheibe 16 und dem Rückspiegel 21 ausnutzt. Unabhängig davon können beiderseits des Einmündungstrichters 14 in der Figur nicht dargestellte Sonnenblenden vorgesehen sein.

Die Ablenkelemente 28 können vorzugsweise zugleich als Isolierelemente ausgebildet sein, die den Wärmeübergang von der Luftströmung zum Dach 22 begrenzen.

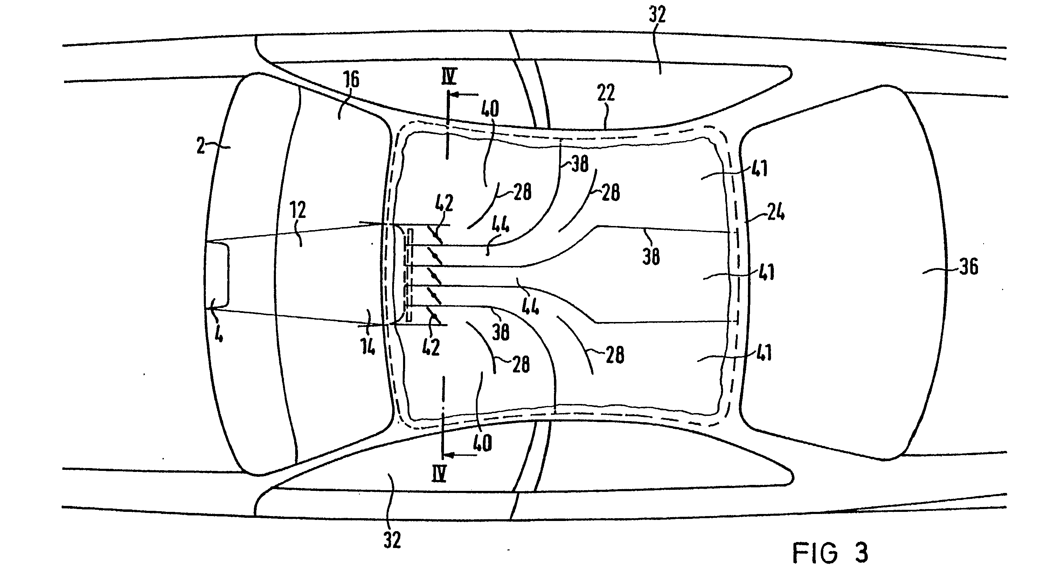

Abweichend von der Ausführungsform gemäß Figur 1 kann gemäß Figur 3, in welcher der Zwischenraum 20 mit geöffnetem Fahrzeugdach 22 veranschaulicht ist, der Zwischenraum 20 zur Luftverteilung in Felder 40 mit vorzugsweise steuerbarer Luftströmung in den nicht dargestellten Austrittsöffnungen 10 eingeteilt werden. Den Feldern 40 kann zu diesem Zweck beispielsweise jeweils eine Klappe 42 zugeordnet sein, die jeweils in einem der Strömungskanäle 44 angeordnet sind. Diese Strömungskanäle 44 werden durch Trennstege 38 gebildet. Unter Umständen können zwischen den Trennstegen 38 zur seitlichen Luftverteilung noch zusätzliche Ablenkelemente 28 angeordnet sein.

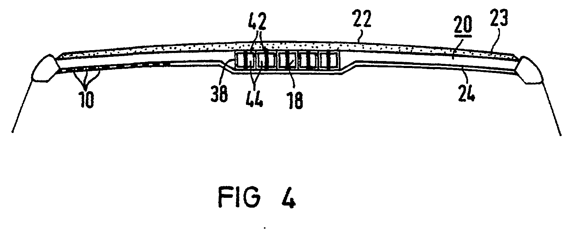

In einer weiteren vorteilhaften Ausführungsform gemäß Figur 4, in welcher der Zwischenraum 20 als Schnitt schematisch angedeutet ist, kann der mittlere Bereich 18 des Zwischenraumes 20 derart in seiner Höhe vergrößert werden, daß ein Hauptströmungskanal für die Luftströmung entsteht. Unterhalb der Isolation 23 des Fahrzeugdaches 22 sind die Trennstege 38 zur Luftführung sowie die zur Steuerung der Luftverteilung vorgesehenen Klappen 42 in den Strömungskanälen 44 angedeutet.

Unter Umständen kann es zweckmäßig sein, den Hauptströmungskanal 18 in seinem Verlauf von der Einmündung des Luftströmungskanales 12 bis etwa zu den hinteren Bereichen 27 für die steuerbare Luftströmung bzw. zu den hinteren Feldern 41 derart etwa keilförmig zu verengen, daß sich seine Höhe allmählich vermindert, wie es aus Figur 2 in Verbindung mit Figur 4 zu entnehmen ist. Dadurch erhält man eine wenigstens annähernd gleichmäßige seitliche Abströmung zu den Feldern 40 und 41.

Unter Umständen kann in der Luftströmung ein Filter zur Staub- und/oder Schadgasentfernung aus der Zuluft vorgesehen sein, das nahezu beliebig innerhalb der Luftströmung 12, beispielsweise oberhalb der Dachverkleidung 24 oder auch innerhalb der Dachverkleidung sowie gegebenenfalls im Bereich des Kühlluftgebläses unterhalb der Luftdüse 4 angeordnet werden kann.

## Patentansprüche

1. Anordnung zur Belüftung eines Kraftfahrzeugs, insbesondere eines Personenkraftwagens, mit einer annähernd parallel zur Frontscheibe (16) in deren Bereich verlaufenden, über einen Einmündungstrichter (14) in einen Zwischenraum (20) zwischen dem Fahrzeugdach (22) und einer mit Öffnungen zum Fahrzeuginnenraum versehenen Dachverkleidung (24) eintretenden Luftströmung, dadurch gekennzeichnet, daß die Luftströmung aus einer von der Scheibenheizung unabhängigen Luftaustrittsdüse (4) im Bereich der Mitte des Armaturenbretts (2) austritt, im zentralen Bereich der Frontscheibe (16) einen wandungslosen, kompakt gebündelten Luftströmungskanal (12) bildet und über dem Einmündungstrichter (14) mit dem Querschnitt des Luftströmungskanals (12) entsprechendem Einlaufquerschnitt in den im wesentlichen als Druckraum ausgebildeten Zwischenraum (20) eintritt.

2. Anordnung nach Anspruch 1, dadurch gekennzeichnet, daß das Verhältnis der Breite $b_0$ der dem Luftströmungskanal (12) zugewandten Öffnung der Luftaustrittsdüse (4) zur Tiefe $a_0$ etwa 5:1 nicht wesentlich überschreitet.

3. Anordnung nach Anspruch 1, dadurch gekennzeichnet, daß der Luftaustrittsdüse (4) eine Laminardrossel (6) vorgeschaltet ist.

4. Anordnung nach Anspruch 1, dadurch gekennzeichnet, daß im Zwischenraum (20) Ablenkelemente (28) mit Lenkflächen zur seitlichen Ablenkung der Luftströmung vorgesehen sind.

5. Anordnung nach Anspruch 1, gekennzeichnet durch eine nach Grösse und/oder Richtung steuerbare Luftströmung aus den Austrittsöffnungen (10) der Dachverkleidung (24) in vorbestimmten Teilbereichen (26, 27).

6. Anordnung nach Anspruch 5, gekennzeichnet durch eine Unterteilung des Zwischenraumes (20) in Felder (40, 41), denen jeweils ein absperrbarer Strömungskanal (44) zugeordnet ist.

7. Anordnung nach Anspruch 5, gekennzeichnet durch eine vom Einmündungstrichter (14) zur Heckenscheibe (36) abnehmende Höhe des Zwischenraumes (20).

8. Anordnung nach Anspruch 1, gekennzeichnet durch Luftschlitze (30) in der Dachverkleidung (24) oberhalb der Seitenfenster (32).

9. Anordnung nach Anspruch 1, dadurch gekennzeichnet, daß die zum Fahrgastraum hin gerichtete Kante der Wand (15) des Einmündungstrichters (14) zur Verengung des Strömungsquerschnitts zur Frontscheibe (16) abgebogen ist.

10. Anordnung nach Anspruch 1, dadurch gekennzeichnet, daß der Einmündungstrichter (14) an seiner Mündung zum Zwischenraum (20) eine Engstelle (33) für die Luftströmung bildet, die mit wenigstens einem Luftschlitz (34) nach Art eines Venturi-Rohres versehen ist.

## Revendications

1. Dispositif pour aérer un véhicule automobile, notamment une voiture de tourisme, comportant un écoulement d'air qui s'étend approximativement parallèlement au pare-brise (16), au voisinage de ce dernier, et pénètre par l'intermédiaire d'un entonnoir formant embouchure (14) dans un espace intercalaire (20) situé entre le toit (22) du véhicule et un revêtement de toit (24) comportant des ouvertures débouchant dans l'habitacle du véhicule, caractérisé par le fait que l'écoulement d'air sort d'une buse de sortie de l'air (4), qui est indépendante du chauffage du pare-brise, au niveau de la partie centrale du tableau de bord (2), forme, dans la partie centrale du pare-brise (16), un canal d'écoulement d'air (12) sans parois, agencé à la manière d'un tube se rétrécissant, et pénètre, par l'intermédiaire de l'entonnoir formant embouchure (14), qui possède une section transversale d'entrée correspondant à la section transversale du canal d'écoulement d'air (12), dans l'espace intercalaire (20) agencé essentiellement sous la forme d'une chambre de pression.

2. Dispositif suivant la revendication 1, caractérisé par le fait que le rapport entre la largeur $b_0$ de l'ouverture, tournée vers le canal d'écoulement d'air (12), de la buse de sortie de l'air (4), et la profondeur $a_0$ ne dépasse pas sensiblement environ 5:1.

3. Dispositif suivant la revendication 1, caractérisé par le fait qu'un orifice d'étranglement à laminaire (6) est installé en amont de la buse de sortie de l'air (4).

4. Dispositif suivant la revendication 1, caractérisé par le fait que des déflecteurs (28) comportant des surfaces déflectrices servant à dévier latéralement l'écoulement d'air sont prévus dans l'espace intercalaire (20).

5. Dispositif suivant la revendication 1, caractérisé par un écoulement d'air, dont l'intensité et/ou la direction peuvent être commandées et qui sort par des ouvertures de sortie (10) de l'habillage de toit (24), dans des zones partielles prédéterminées (26, 27).

6. Dispositif suivant la revendication 5, caractérisé par une subdivision de l'espace intercalaire (20) dans des zones (40, 41), auquel est associé respectivement un canal d'écoulement (34) pouvant être fermé.

7. Dispositif suivant la revendication 5, caractérisé par le fait que la hauteur de l'espace intercalaire (20) diminue depuis l'entonnoir formant embouchure (14) en direction de la lunette arrière (36).

8. Dispositif suivant la revendication 1, caractérisé par des fentes (30) de passage de l'air, ménagée dans le revêtement de toit (24) au-dessus de la vitre latérale (32).

9. Dispositif suivant la revendication 1, caractérisé par le fait que le bord, tourné vers l'habitacle, de la paroi (15) de l'entonnoir formant embouchure (14) est coudé de manière à réduire la section transversale d'écoulement en direction du pare-brise (16).

10. Dispositif suivant la revendication 1, caractérisé par le fait que l'entonnoir formant embouchure (14) forme, au niveau de sa zone de pénétration dans l'espace intercalaire (20), une zone d'étranglement (33) pour l'écoulement d'air, qui comporte au moins une fente (34) de passage de l'air réalisée à la manière d'un tube à venturi.

**Claims**

1. Arrangement for ventilating a motor vehicle, more particularly a passenger vehicle, with a flow of air flowing approximately parallel to the windscreen (16) within its area and flowing, via a discharge funnel (14), into an interspace (20) located between the vehicle roof (22) and a roof lining (24) provided with openings towards the interior of the vehicle, characterised in that the flow of air flows out of an air outlet nozzle (4), independent of the windscreen heating, in the region of the centre of the dashboard (2), forms a wall-less, compactly focused air flow duct (12) in the central region of the windscreen (16) and via the discharge funnel (14) whose inlet cross-section corresponds to the cross-section of the air flow duct (12) enters the interspace (20) designed essentially as a pressure chamber.

2. Arrangement according to claim 1, characterised in that the ratio of the width $b_0$ of the opening, facing towards the air flow duct (12), of the air outlet nozzle (4) to the depth $a_0$ does not substantially exceed about 5:1.

3. Arrangement according to claim 1, characterised in that a laminar restrictor (6) is disposed upstream of the air outlet nozzle (4).

4. Arrangement according to claim 1, characterised in that deflection elements (28) which have deflection surfaces to deflect the flow of air laterally are provided in the interspace (20).

5. Arrangement according to claim 1, characterised by an air flow, controllable with respect to its magnitude and/or direction, from the outlet openings (10) of the roof lining (24) into predetermined partial regions (26, 27).

6. Arrangement according to claim 5, characterised by the subdivision of the interspace (20) into zones (40, 41), to each of which are assigned respective flow ducts (44) which may be closed off.

7. Arrangement according to claim 5, characterised by a height of the interspace (20) which decreases from the discharge funnel (14) to the rear window (36).

8. Arrangement according to claim 1, characterised by air vents (30) in the roof lining (24) above the side windows (32).

9. Arrangement according to claim 1, characterised in that the edge of the wall (15) of the discharge funnel (14) which is directed towards the passenger compartment is deflected towards the windscreen (16) to narrow the cross-section of the flow.

10. Arrangement according to claim 1, characterised in that the discharge funnel (14) forms a constriction (33) to the flow of air at its opening into the interspace (2), said constriction being provided with at least one air vent (34) in the manner of a Venturi tube.

FIG 1

FIG 2

FIG 3

EP 0 255 004 B1

FIG 4